# EUROPÄISCHE PATENTSCHRIFT

(11) **EP 3 660 794 B1**
(45) Veröffentlichungstag und Bekanntmachung des Hinweises auf die Patenterteilung: **06.09.2023**
(21) Anmeldenummer: 18208836.9
(22) Anmeldetag: 28.11.2018
(51) Int. Cl.: G07C 9/00, G06F 21/31, G07C 9/27, G07C 9/32, H04W 4/02

(54) **VERFAHREN UND EINRICHTUNG ZUM SCHÜTZEN EINER TECHNISCHEN ANLAGE**
METHOD AND DEVICE FOR PROTECTING A TECHNICAL SYSTEM
PROCÉDÉ ET DISPOSITIF DE PROTECTION D'UNE INSTALLATION TECHNIQUE

(43) Veröffentlichungstag der Anmeldung: 03.06.2020
(73) Patentinhaber: Siemens Aktiengesellschaft, 80333 München (DE)
(72) Erfinder: Bisale, Chaitanya, 90471 Nürnberg (DE); Kohl, Andreas, 90556 Cadolzburg (DE)
(74) Vertreter: Siemens Patent Attorneys

(56) Entgegenhaltungen:
- JP-A- 2004 206 363
- JP-A- 2017 174 226
- US-A1- 2015 150 101
- US-A1- 2017 118 591

## Beschreibung

Die Erfindung bezieht sich auf ein Verfahren zum Schützen einer technischen Anlage, die einen physischen bzw. körperlichen Personenzugang zu der Anlage und einen computermäßigen Zugriff auf eine Rechnereinrichtung der Anlage ermöglicht.

Aus der Druckschrift US 2015/150101 A1 ist ein Authentifizierungsverfahren für Benutzer eines Computers vor Ort und per Fernzugriff bekannt.

Der Erfindung liegt die Aufgabe zugrunde, ein Verfahren der genannten Art mit Blick auf die Verhinderung von unbefugten Zugriffs- oder Zugangsversuchen zu verbessern.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass Personen, die aktuellen Zugriff auf die Rechnereinrichtung haben, als auf die Rechnereinrichtung zugreifende Personen unter Bildung von Rechnernutzerdaten registriert werden und Personen, die sich in der Anlage befinden, als vor Ort befindliche Personen unter Bildung von Vorortdaten registriert werden, und im Falle eines neuen Zugangs- oder eines neuen Zugriffswunsches eine Plausibilitätsprüfung durchgeführt wird, bei der geprüft wird, ob der Zugangswunsch mit den registrierten Rechnernutzerdaten plausibel ist oder der Zugriffswunsch mit den registrierten Vorortdaten plausibel ist.

Ein wesentlicher Vorteil des erfindungsgemäßen Verfahrens ist darin zu sehen, dass erfindungsgemäß Rechnernutzerdaten mit Vorortdaten abgeglichen werden und im Falle unplausibler Datensätze auf einen Missbrauch geschlossen und ein Zugriff bzw. Zugang unter Umständen verhindert werden kann, auch wenn bei dem Zugangs- oder Zugriffsversuch Zugangsdaten, die als solche einen Zugang oder Zugriff ermöglichen würden, verwendet werden. Es ist also beispielsweise mit Hilfe der Plausibilitätsprüfung unter bestimmten Bedingungen möglich, Zugangs- oder Zugriffsversuche auf der Basis gestohlener Zugangsdaten zu verhindern.

Im Falle eines Zugangswunsches wird bei Feststellung eines Plausibilitätsproblems vorzugsweise der Zugang verweigert.

Im Falle eines Zugriffswunsches wird bei Feststellung eines Plausibilitätsproblems vorzugsweise der Zugriff verweigert.

Alternativ oder zusätzlich kann in vorteilhafter Weise vorgesehen werden, dass im Falle eines bei der Plausibilitätsprüfung festgestellten Plausibilitätsproblems ein Alarmsignal erzeugt wird.

Auch kann vorgesehen werden, dass im Falle eines Zugangswunsches der Zugang ausschließlich dann gewährt wird, wenn die Plausibilitätsprüfung kein Plausibilitätsproblem ergibt, und/oder im Falle eines Zugriffswunsches der Zugriff ausschließlich dann gewährt wird, wenn die Plausibilitätsprüfung kein Plausibilitätsproblem ergibt.

Im Falle eines Zugangsversuchs einer Person in die Anlage wird geprüft, ob die Person zu diesem Zeitpunkt als auf die Rechnereinrichtung zugreifende Person registriert ist; falls dies der Fall ist, wird auf ein Plausibilitätsproblem geschlossen.

Die Rechnereinrichtung ermöglicht einen Fernzugriff. Es wird im Falle eines Zugangsversuchs einer Person in die Anlage geprüft, ob die Person zu diesem Zeitpunkt als über einen Fernzugriff zugreifende Person registriert ist; falls dies der Fall ist, wird auf ein Plausibilitätsproblem geschlossen.

Auch ist es vorteilhaft, wenn im Falle eines Zugangsversuchs einer Person in die Anlage geprüft wird, ob die Person in einer vor diesem Zeitpunkt liegenden Sicherheitszeitspanne vorgegebener Länge als auf die Rechnereinrichtung zugreifende Person registriert war; falls dies der Fall ist, wird vorzugsweise auf ein Plausibilitätsproblem geschlossen.

Im Falle einer Rechnereinrichtung mit Fernzugriff ist es also vorteilhaft, wenn im Falle eines Zugangsversuchs einer Person in die Anlage geprüft wird, ob die Person in einer vor diesem Zeitpunkt liegenden Sicherheitszeitspanne vorgegebener Länge als über einen Fernzugriff zugreifende Person registriert war; falls dies der Fall ist, wird vorzugsweise auf ein Plausibilitätsproblem geschlossen.

Im Falle eines vor Ort stattfindenden Zugriffsversuchs auf die Rechnereinrichtung wird vorzugsweise geprüft, ob die zugreifende Person zu diesem Zeitpunkt als in der Anlage befindlich registriert ist und, falls dies nicht der Fall ist, wird vorzugsweise auf ein Plausibilitätsproblem geschlossen.

Falls die Rechnereinrichtung einen Fernzugriff ermöglicht, wird im Falle eines Fernzugriffsversuchs geprüft, ob die Person zu diesem Zeitpunkt als in der Anlage befindlich registriert ist oder in einer vor diesem Zeitpunkt liegenden Sicherheitszeitspanne vorgegebener Länge als in der Anlage befindlich registriert war, und, falls dies der Fall ist, wird auf ein Plausibilitätsproblem geschlossen.

Als technische Anlage wird vorzugsweise ein Umspannwerk einer elektrischen Energieverteilanlage geschützt.

Insbesondere bei der letztgenannten Verfahrensvariante ist es vorteilhaft, wenn eine Rechnereinrichtung eine Steuereinrichtung der technischen Anlage bzw. des Umspannwerks oder einen Bestandteil einer Steuereinrichtung der technischen Anlage bzw. des Umspannwerks bildet und die Plausibilitätsprüfung von der anlageneigenen bzw. umspannwerkeigenen Rechnereinrichtung und/oder einer dieser Rechnereinrichtung übergeordneten Rechnereinrichtung, die innerhalb der technischen Anlage oder außerhalb der technischen Anlage angeordnet sein kann, durchgeführt wird.

Die Erfindung bezieht sich darüber hinaus auf eine Missbrauchserkennungseinrichtung zum Schützen einer technischen Anlage, die einen physischen Personenzugang zu der Anlage und einen computermäßigen Zugriff auf eine Rechnereinrichtung der Anlage ermöglicht.

Bezüglich einer solchen Missbrauchserkennungseinrichtung ist erfindungsgemäß vorgesehen, dass die Missbrauchserkennungseinrichtung eine erste Erfassungseinrichtung aufweist, die Personen, die aktuellen Zugriff auf die Rechnereinrichtung haben, als auf die Rechnereinrichtung zugreifende Personen unter Bildung von Rechnernutzerdaten registriert, die Missbrauchserkennungseinrichtung eine zweite Erfassungseinrichtung aufweist, die Personen, die sich in der Anlage befinden, als vor Ort befindliche Personen unter Bildung von Vorortdaten registriert, und die Missbrauchserkennungseinrichtung eine Prüfeinrichtung aufweist, die im Falle eines neuen Zugangs- oder eines neuen Zugriffswunsches eine Plausibilitätsprüfung durchführt, bei der sie prüft, ob der Zugangswunsch mit den registrierten Rechnernutzerdaten plausibel ist oder der Zugriffswunsch mit den registrierten Vorortdaten plausibel ist.

Bezüglich der Vorteile der erfindungsgemäßen Missbrauchserkennungseinrichtung sei auf die obigen Ausführungen im Zusammenhang mit dem erfindungsgemäßen Verfahren verwiesen.

Die Missbrauchserkennungseinrichtung weist vorzugsweise eine Alarmeinrichtung auf, die im Falle eines festgestellten Plausibilitätsproblems ein Alarmsignal erzeugt.

Auch ist es vorteilhaft, wenn - alternativ oder zusätzlich - die Missbrauchserkennungseinrichtung eine Zugangssteuereinrichtung aufweist, die im Falle eines Zugangswunsches bei Feststellung eines Plausibilitätsproblems den Zugang verweigert und/oder im Falle eines Zugangswunsches den Zugang ausschließlich dann gewährt, wenn die Plausibilitätsprüfung kein Plausibilitätsproblem ergibt.

Auch ist es vorteilhaft, wenn - alternativ oder zusätzlich - die Missbrauchserkennungseinrichtung eine Zugriffssteuereinrichtung aufweist, die im Falle eines Zugriffswunsches bei Feststellung eines Plausibilitätsproblems den Zugriff verweigert und/oder im Falle eines Zugriffswunsches den Zugriff ausschließlich dann gewährt, wenn die Plausibilitätsprüfung kein Plausibilitätsproblem ergibt.

Die Alarmeinrichtung, die Zugriffssteuereinrichtung und/oder die Zugangssteuereinrichtung sind vorzugsweise in der Prüfeinrichtung integriert, beispielsweise in Form vom Softwaresubmodulen im Falle einer softwareseitigen Realisierung der Prüfeinrichtung als Software-Prüfmodul.

Die Prüfeinrichtung der Missbrauchserkennungseinrichtung ist vorzugsweise als Softwaremodul in der Rechnereinrichtung der technischen Anlage oder in einer übergeordneten Rechnereinrichtung implementiert.

Die Erfindung bezieht sich darüber hinaus auf ein Umspannwerk, das mit einer Missbrauchserkennungseinrichtung ausgestattet ist oder mit einer externen Missbrauchserkennungseinrichtung in Verbindung steht.

Bezüglich des Umspannwerks wird es als vorteilhaft angesehen, wenn eine Rechnereinrichtung des Umspannwerks als Steuereinrichtung zum Steuern des Umspannwerks ausgestaltet ist und zumindest die Prüfeinrichtung der Missbrauchserkennungseinrichtung als Softwaremodul in der Rechnereinrichtung des Umspannwerks oder in einer dieser Rechnereinrichtung übergeordneten (internen oder externen) Rechnereinrichtung implementiert ist.

Die Erfindung wird nachfolgend anhand von Ausführungsbeispielen beispielhaft näher erläutert; dabei zeigen beispielhaft
- Figur 1: eine Anordnung mit einer technischen Anlage und einem Ausführungsbeispiel für eine erfindungsgemäße externe Missbrauchserkennungseinrichtung, anhand derer beispielhaft Ausführungsbeispiele für das erfindungsgemäße Verfahren beschrieben werden,
- Figur 2: ein Ausführungsbeispiel für die Arbeitsweise der Missbrauchserkennungseinrichtung gemäß Figur 1 bei Zugangsversuchen,
- Figur 3: beispielhaft die Erkennung eines Plausibilitätsproblems im Falle eines unauthorisierten Zugangsversuchs,
- Figur 4: beispielhaft die Erkennung eines Plausibilitätsproblems im Falle eines anderen unauthorisierten Zugangsversuchs,
- Figur 5: ein Ausführungsbeispiel für die Arbeitsweise der Missbrauchserkennungseinrichtung gemäß Figur 1 im Falle eines Vorort-Zugriffswunsches,
- Figur 6: beispielhaft die Erkennung eines Plausibilitätsproblems im Falle eines unauthorisierten VorortZugriffswunsches,
- Figur 7: ein Ausführungsbeispiel für die Arbeitsweise der Missbrauchserkennungseinrichtung gemäß Figur 1 im Falle eines Fernzugriffswunsches,
- Figur 8: beispielhaft die Erkennung eines Plausibilitätsproblems im Falle eines unauthorisierten Fernzugriffswunsches,
- Figur 9: ein weiteres Ausführungsbeispiel für eine Anordnung mit einer technischen Anlage und einer externen Missbrauchserkennungseinrichtung, wobei die Missbrauchserkennungseinrichtung ein Prüfmodul für die Bearbeitung von Zugangswünschen und ein Prüfmodul für die Bearbeitung von Zugriffswünschen umfasst, und
- Figur 10: ein Ausführungsbeispiel für eine Anordnung mit einer technischen Anlage und einer internen Missbrauchserkennungseinrichtung, die in einer Rechnereinrichtung der technischen Anlage integriert ist.

In den Figuren werden der Übersicht halber für identische oder vergleichbare Komponenten stets dieselben Bezugszeichen verwendet.

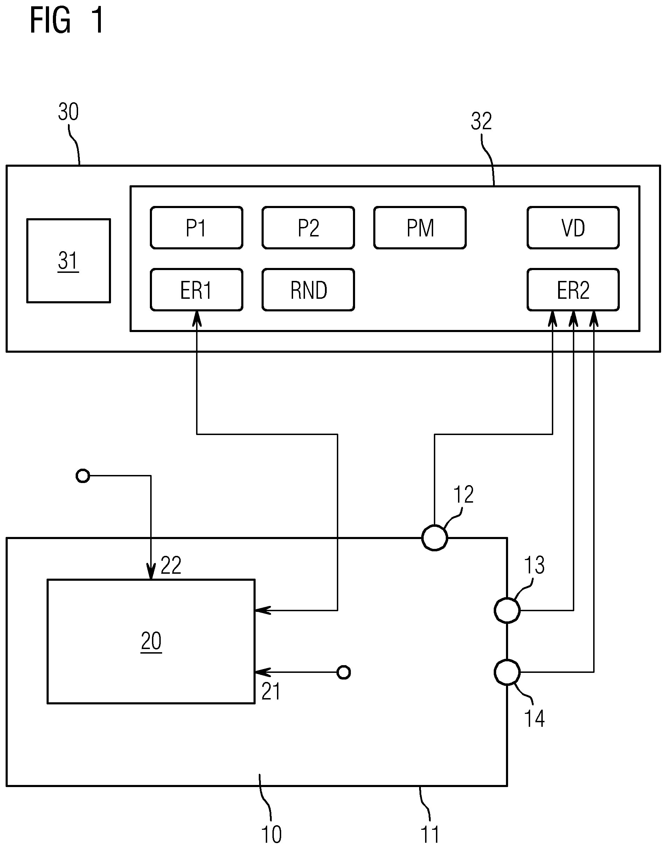

Die Figur 1 zeigt ein Ausführungsbeispiel für eine Anordnung mit einer technischen Anlage 10, die durch eine äußere Schutzeinrichtung 11, beispielsweise in Form eines Zaunes, einer Mauer oder dergleichen, vor einem unauthorisierten Betreten bzw. einem unauthorisierten Zugang geschützt wird. Ein Zugang in die technische Anlage 10 ist lediglich an überwachten Zugangspunkten 12, 13 und 14 möglich. Bei der technischen Anlage 10 handelt es sich vorzugsweise um ein Umspannwerk einer Energieverteilanlage.

Die technische Anlage 10 umfasst eine Rechnereinrichtung 20. Die Rechnereinrichtung 20 weist zumindest eine Vorort-Zugriffsschnittstelle 21 auf, die in der technischen Anlage, also vor Ort, befindlichen Personen einen Zugriff auf die Rechnereinrichtung 20 ermöglicht; außerdem weist die Rechnereinrichtung zumindest eine Fernzugriffsschnittstelle 22 auf, die einen Fernzugriff, also von außerhalb der technischen Anlage 10, auf die Rechnereinrichtung 20, beispielsweise über das Internet, ermöglicht. Die Rechnereinrichtung 20 dient beispielsweise zum Steuern, Regeln und/oder Überwachen von Komponenten der technischen Anlage 10, beispielsweise zum Ein- und/oder Ausschalten von elektrischen Schaltern der technischen Anlage 10.

Bei dem Ausführungsbeispiel gemäß Figur 1 wird ein Zugang in die technische Anlage 10 und ein Zugriff auf die Rechnereinrichtung 20 von einer übergeordneten, beispielweise externen, und außerhalb der technischen Anlage 10 befindlichen, Rechnereinrichtung 30 überwacht, die mindestens einen Rechner 31 sowie mindestens einen Speicher 32 aufweist.

In dem Speicher 32 ist ein Datensatz P1 abgespeichert, in dem solche Personen aufgeführt sind, die - bei Nichtvorliegen eines Plausibilitätsproblems - einen Zugriff auf die Rechnereinrichtung 20 erhalten dürfen. In einem Datensatz P2 des Speichers 32 sind solche Personen abgespeichert, denen - bei Nichtvorliegen eines Plausibilitätsproblems - ein Zugang in die technische Anlage 10 gewährt werden kann.

In dem Speicher 32 ist außerdem ein erstes Erfassungsmodul ER1 abgespeichert, das bei Ausführung durch den Rechner 31 eine erste Erfassungseinrichtung bildet; diese erste Erfassungseinrichtung erfasst Personen, die aktuell Zugriff auf die Rechnereinrichtung 20 der technischen Anlage 10 haben, und registriert diese als auf die Rechnereinrichtung 20 zugreifende Personen unter Bildung von Rechnernutzerdaten RND. Die Rechnernutzerdaten RND werden in einem Speicherbereich des Speichers 32 abspeichert.

In dem Speicher 32 ist darüber hinaus ein zweites Erfassungsmodul ER2 abgespeichert, das bei Ausführung durch den Rechner 31 solche Personen, die sich in der technischen Anlage 10 befinden, erfasst und als vor Ort befindliche Personen unter Bildung von Vorortdaten VD registriert und die entsprechenden Vorortdaten VD in einem Speicherbereich des Speichers 32 abspeichert.

Zur Plausibilitätsprüfung weist der Speicher 32 ein Prüfmodul PM auf, das bei Ausführung durch den Rechner 31 eine Prüfeinrichtung bildet, die bei Vorliegen eines neuen Zugangswunsches oder eines neuen Zugriffswunsches eine Plausibilitätsprüfung durchführt. Bei der Plausibilitätsprüfung prüft das Prüfmodul PM, ob der Zugangswunsch mit den registrierten Rechnernutzerdaten RND plausibel ist oder der Zugriffswunsch mit den registrierten Vorortdaten VD plausibel ist.

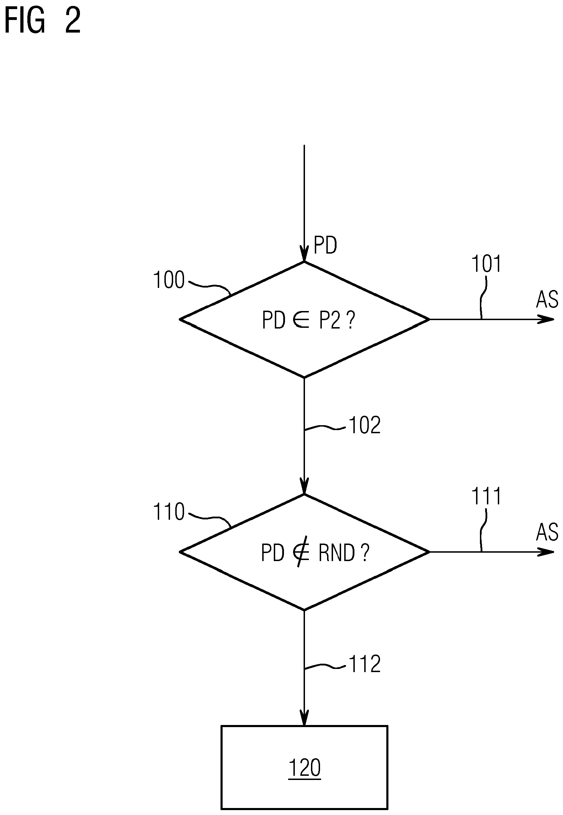

Die Figur 2 zeigt beispielhaft die Arbeitsweise der übergeordneten Rechnereinrichtung 30, insbesondere die Arbeitsweise des Prüfmoduls PM bzw. der dadurch gebildeten Prüfeinrichtung, im Falle eines Zugangswunsches.

Bei Vorliegen eines Zugangswunsches an einem der Zugangspunkte 12, 13 oder 14 der technischen Anlage 10 gemäß Figur 1 wird in einem Prüfschritt 100 zunächst geprüft, ob die beim Zugangswunsch abgegebenen bzw. vorgelegten Personendaten PD in dem Datensatz P2 des Speichers 32 abgespeichert sind und die durch die Personendaten PD identifizierte Person für einen Zugang in die technische Anlage überhaupt berechtigt wäre. Fällt der Prüfschritt 100 negativ aus, so wird gemäß einem Zweig 101 der Zugang in die technische Anlage 10 verweigert und es wird ein Alarmsignal AS erzeugt, das einen unauthorisierten Zugangsversuch in die technische Anlage 10 anzeigt.

Fällt der Prüfschritt 100 positiv aus, so wird gemäß einem Zweig 102 mit einem Plausibilitätsprüfschritt 110 fortgefahren, bei dem geprüft wird, ob die Personendaten PD bei den Rechnernutzerdaten RND abgespeichert sind. Ist dies der Fall, so bedeutet es, dass eine Person Zugang zur technischen Anlage 10 erlangen möchte, die zu diesem Zeitpunkt bereits entweder innerhalb der technischen Anlag 10, also vor Ort, an der Vorort-Zugriffsschnittstelle 21 oder per Fernzugriff an der Fernzugriffsschnittstelle 22 auf die Rechnereinrichtung 20 zugreift und der Zugangswunsch somit unplausibel ist.

Wird im Plausibilitätsprüfschritt 110 festgestellt, dass die Personendaten PD in den Rechnernutzerdaten RND enthalten sind, so wird gemäß einem Zweig 111 auf ein Plausibilitätsproblem geschlossen und es wird ein Alarmsignal AS erzeugt. Gleichzeitig wird der Zugang zur technischen Anlage 10 blockiert.

Sind die Personendaten PD in den Rechnernutzerdaten RND nicht enthalten, so wird der Zugang gemäß Zweig 112 in einem Freigabeschritt 120 gewährt.

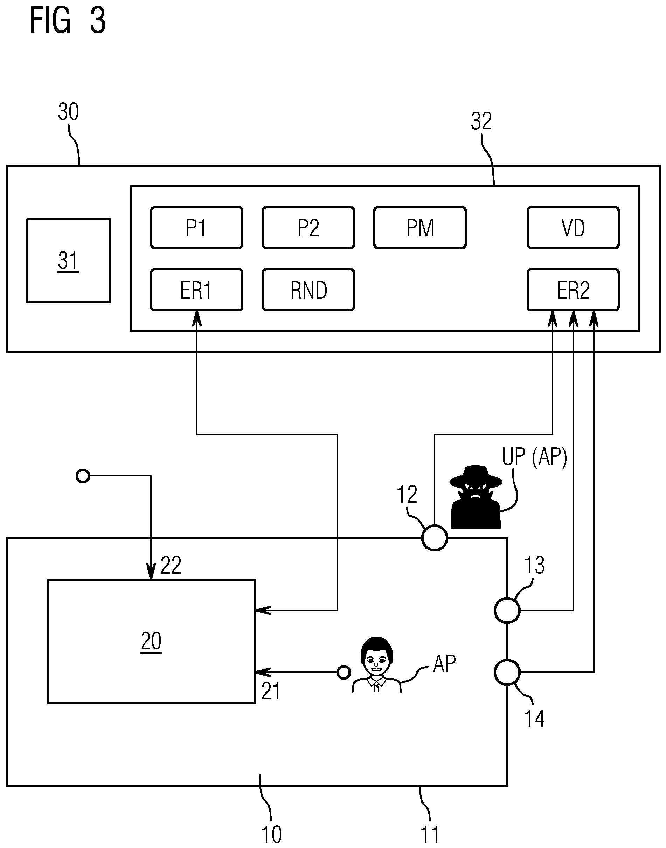

Die Figur 3 zeigt beispielhaft den Fall, dass eine unauthorisierte Person UP mit Personendaten PD einer authorisierten Person AP am Zugangspunkt 12 Zugang zur technischen Anlage 10 erbittet. Da die Personendaten PD der authorisierten Person AP in dem Datensatz P2 des Speichers 32 enthalten sind, fällt der Prüfschritt 100 positiv aus und es wird gemäß dem Zweig 102 mit dem Plausibilitätsprüfschritt 110 fortgefahren.

Da bei dem beispielhaften Zustand gemäß Figur 3 die entsprechende authorisierte Person AP zum Zeitpunkt des Zugangswunsches bzw. in einer vorgegebenen Zeitspanne vor diesem Zugangswunsch an der Vorort-Zugriffsschnittstelle 21 Zugriff auf die Rechnereinrichtung 20 hat oder hatte und deren Personendaten PD in den Rechnernutzerdaten RND enthalten sind, wird das Prüfmodul PM gemäß dem Zweig 112 ein Plausibilitätsproblem erkennen und das Alarmsignal AS erzeugen sowie den Zugang verweigern.

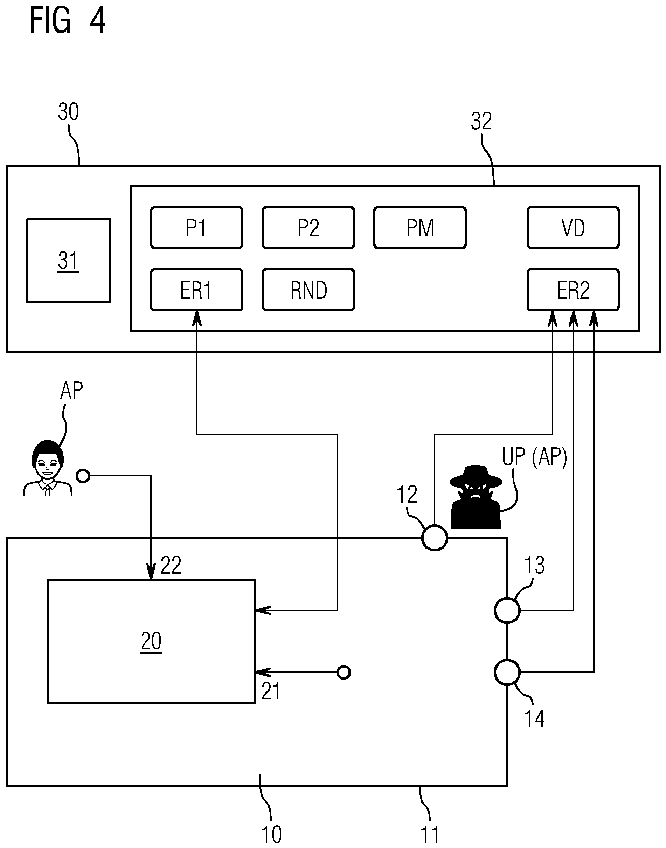

Die Figur 4 zeigt beispielhaft den Fall, dass eine unauthorisierte Person UP mit Personendaten PD einer authorisierten Person AP am Zugangspunkt 12 Zugang zur technischen Anlage 10 erbittet, wobei die authorisierte Person AP zum Zeitpunkt des Zugangswunsches bzw. in einer vorgegebenen Zeitspanne vor diesem Zugangswunsch an der Fernzugriffsschnittstelle 22 Zugriff auf die Rechnereinrichtung 20 hat oder hatte. Da die Personendaten PD der authorisierten Person AP in den Rechnernutzerdaten RND enthalten sind, wird das Prüfmodul PM gemäß dem Zweig 111 ein Plausibilitätsproblem erkennen und das Alarmsignal AS erzeugen sowie den Zugang verweigern.

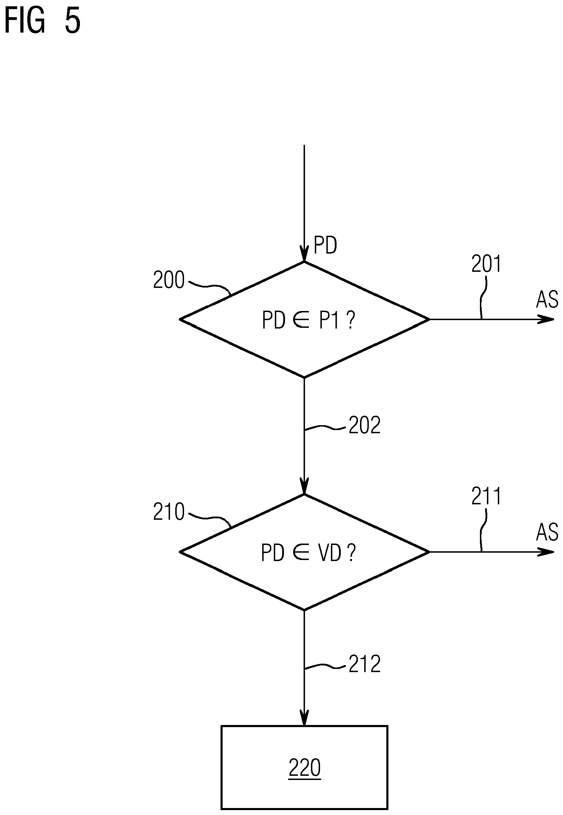

Die Figur 5 zeigt beispielhaft die Arbeitsweise des Prüfmoduls PM der übergeordneten Rechnereinrichtung 30 im Falle eines Zugriffswunsches auf die Rechnereinrichtung 20 der technischen Anlage 10. Dabei wird beispielhaft davon ausgegangen, dass der Zugriffswunsch an der Vorort-Zugriffsschnittstelle 21 der Rechnereinrichtung 20 eingegeben wird, also innerhalb der technischen Anlage 10.

Zunächst wird in einem Prüfschritt 200 das Prüfmodul PM prüfen, ob die Personendaten PD der zugreifenden Person in dem Datensatz P1, in dem die zugriffsberechtigten Personen aufgeführt sind, enthalten ist. Ist dies nicht der Fall, so wird gemäß einem Zweig 201 der Zugriff verweigert und es wird ein Alarmsignal AS erzeugt.

Sind die Personendaten PD im Datensatz P1 enthalten, so wird gemäß einem Zweig 202 ein Plausibilitätsprüfschritt 210 durchgeführt, bei dem geprüft wird, ob die Personendaten PD bei den Vorortdaten VD enthalten sind. Ist dies nicht der Fall, so schließt das Prüfmodul PM daraus, dass ein unauthorisierter Zugriffsversuch unternommen wird und verweigert in einem Zweig 211 den Zugriff auf die Rechnereinrichtung 20. Außerdem wird ein Alarmsignal AS erzeugt.

Stellt das Prüfmodul PM hingegen fest, dass die Personendaten PD in den Vorortdaten VD enthalten sind, sich also die den Zugriff an der Vorort-Zugriffsschnittstelle 21 erbittende Person tatsächlich in der technischen Anlage 10 aufhält, so wird gemäß Zweig 212 in einem Freigabeschritt 220 der Zugriff auf die Rechnereinrichtung 20 gewährt.

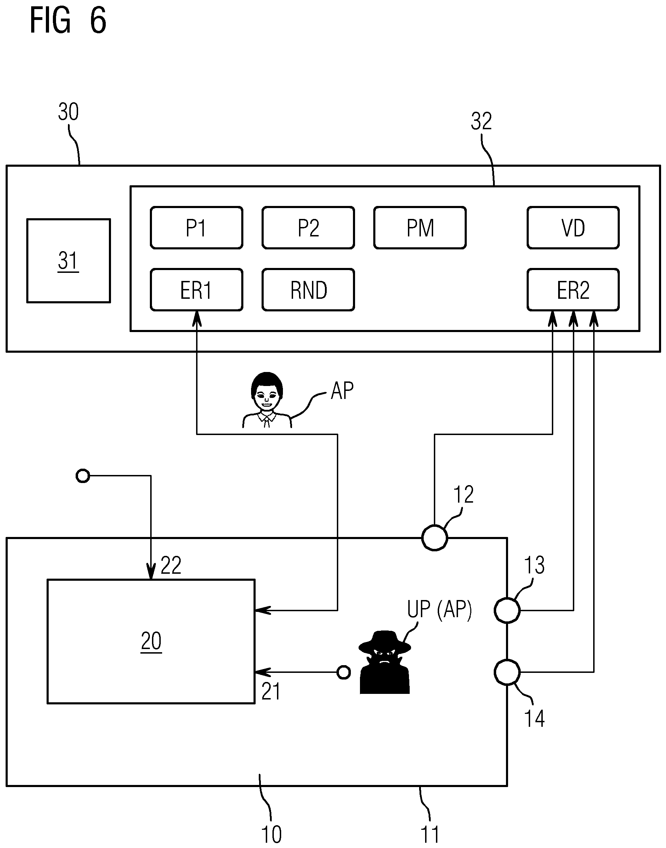

Die Figur 6 zeigt beispielhaft die Anordnung gemäß Figur 1 im Falle eines unauthorisierten Zugriffsversuchs durch eine unauthorisierte Person UP, die mit Personendaten einer authorisierten Person AP einen Zugriffsversuch an der Vorort-Zugriffsschnittstelle 21 durchführt. Da die authorisierte Person AP zu diesem Zeitpunkt - bzw. innerhalb einer Sicherheitszeitspanne davor - nicht als in der technischen Anlage 10 registriert ist, erkennt das Prüfmodul PM das entsprechende Plausibilitätsproblem, verweigert gemäß Zweig 211 den Zugriff und erzeugt ein Alarmsignal AS.

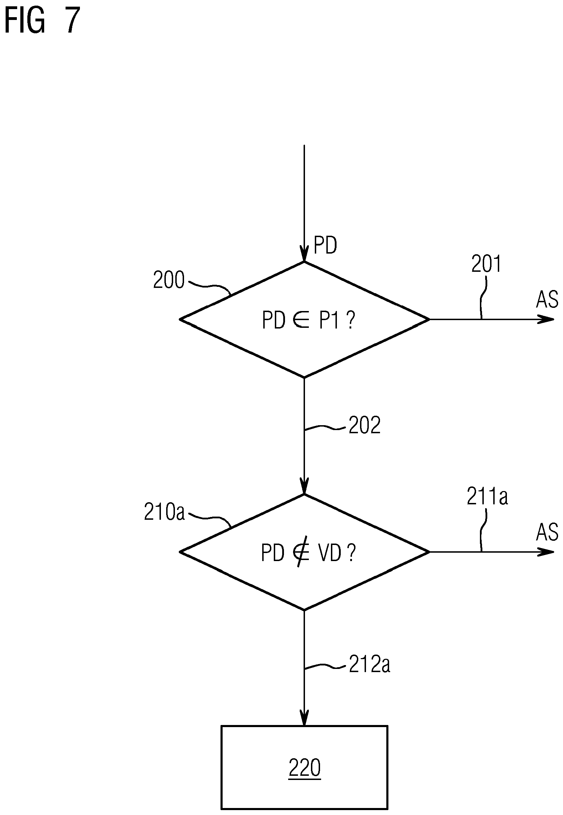

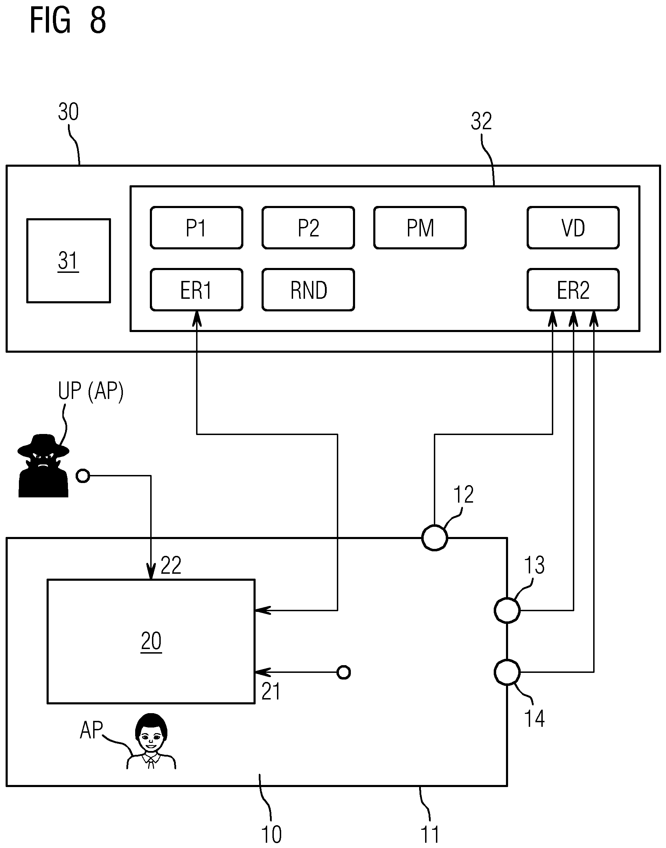

Die Figur 7 zeigt die Arbeitsweise des Prüfmoduls PM für den Fall, dass ein Zugriffswunsch über die Fernzugriffsschnittstelle 22 an der Rechnereinrichtung 20 eingegeben wird. In einem solchen Falle wird bei dem Plausibilitätsprüfschritt 210 geprüft, ob die Vorortdaten VD eine Anwesenheit innerhalb der technischen Anlage 10 anzeigen oder nicht. Befindet sich die Person, deren Personendaten PD an der Fernzugriffsschnittstelle 22 im Rahmen des Zugriffsversuchs übermittelt werden, innerhalb der technischen Anlage 10, so wird das Prüfmodul PM im Plausibilitätsprüfschritt 210a auf ein Plausibilitätsproblem schließen und gemäß Zweig 211a den Zugriff verweigern sowie ein Alarmsignal AS erzeugen; eine solche Situation zeigt beispielhaft die Figur 8. Andernfalls wird gemäß Zweig 212a im Freigabeschritt 220 die Freigabe erfolgen.

Bei den im Zusammenhang mit den Figuren 1 bis 8 erläuterten Ausführungsbeispielen bilden das Prüfmodul PM, das erste Erfassungsmodul ER1 und das zweite Erfassungsmodul ER2 bei Ausführung durch den Rechner 31 eine Missbrauchserkennungseinrichtung, die im Falle eines Zugriffs auf die Rechnereinrichtung 20 bzw. eines Zugangswunsches in die technische Anlage 10 eine Plausibilitätsprüfung durchführt, wie sie oben erläutert worden ist.

Das Prüfmodul PM bzw. die durch diese gebildete Prüfeinrichtung übt darüber hinaus die Funktion einer Zugriffssteuereinrichtung und die Funktion einer Zugangssteuereinrichtung aus, so dass sie - wie im Zusammenhang mit den Figuren 1 bis 8 erläutert - den Zugriff und/oder Zugang je nach Ergebnis der Plausibilitätsprüfung selbst erlaubt oder selbst unterbindet.

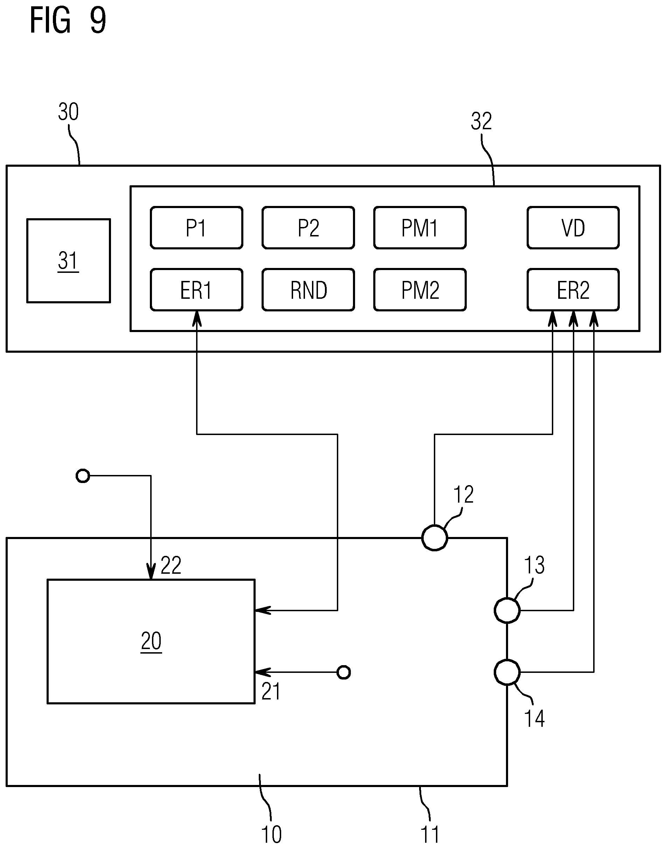

Die Figur 9 zeigt eine Ausführungsvariante, bei der zwei Prüfmodule PM1 und PM2 vorhanden sind.

Das Prüfmodul PM1 dient bei Ausführung durch den Rechner 31 dazu, eine Plausibilitätsprüfung im Falle eines Zugangswunsches an einem der Zugangspunkte 12, 13 oder 14 durchzuführen und den Zugang zu gewähren oder zu unterbinden. Das Prüfmodul PM1 kann beispielsweise so arbeiten, wie dies im Zusammenhang mit den Figuren 2 bis 4 erläutert worden ist.

Das Prüfmodul PM2 dient bei Ausführung durch den Rechner 31 dazu, eine Plausibilitätsprüfung im Falle eines Zugriffswunsches an der Vorort-Zugriffsschnittstelle 21 oder der Fernzugriffsschnittstelle 22 durchzuführen und den Zugriff zu gewähren oder zu unterbinden. Das Prüfmodul PM2 kann beispielsweise so arbeiten, wie dies im Zusammenhang mit den Figuren 5 bis 8 erläutert worden ist.

Die Rechnereinrichtung 30 kann im Übrigen auch mehr als einen Rechner 31 und mehr als einen Speicher 32 aufweisen, die beispielsweise räumlich getrennt sein können und in einer Cloud-Struktur zusammenarbeiten. In diesem Falle kann einer der Rechner beispielsweise an einem ersten Plausibilitätsprüfungsort das Prüfmodul PM1 ausführen und eine Plausibilitätsprüfung im Falle eines Zugangswunsches an einem der Zugangspunkte 12, 13 oder 14 durchführen, wie dies im Zusammenhang mit den Figuren 2 bis 4 erläutert worden ist.

Ein anderer der Rechner kann bei einer solchen Ausführungsvariante beispielsweise an einem zweiten Plausibilitätsprüfungsort das Prüfmodul PM2 ausführen und eine Plausibilitätsprüfung im Falle eines Zugriffswunsches an der Vorort-Zugriffsschnittstelle 21 oder der Fernzugriffsschnittstelle 22 durchzuführen, wie dies im Zusammenhang mit den Figuren 5 bis 8 erläutert worden ist.

Die Erfassungsmodule ER1 und ER2 können von einem oder beiden der genannten Rechner oder von anderen Rechnern der Rechnereinrichtung 30 ausgeführt werden. Die Datensätze P1 und P2, die Rechnernutzerdaten RND und die Vorortdaten VD können in einem der Speicher der Rechnereinrichtung 30 oder auf mehrere Speicher der Rechnereinrichtung 30 verteilt abgespeichert sein.

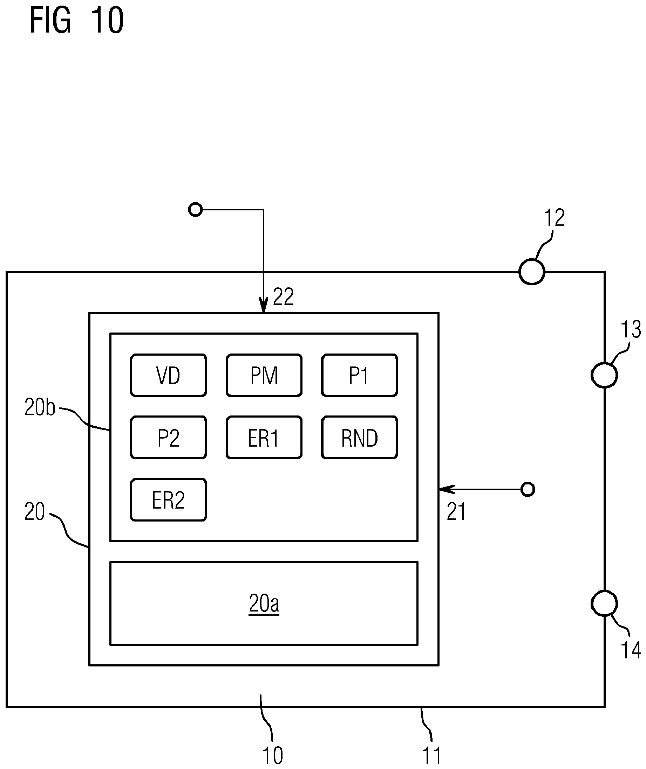

Die Figur 10 zeigt ein weiteres Ausführungsbeispiel für eine Missbrauchserkennungseinrichtung, die durch ein Prüfmodul PM, ein erstes Erfassungsmodul ER1 und ein zweites Erfassungsmodul ER2 gebildet wird, wie sie oben im Zusammenhang mit den Figuren 1 bis 8 erläutert worden sind. Im Unterschied zu dem Ausführungsbeispiel gemäß den Figuren 1 bis 8 ist bei dem Ausführungsbeispiel gemäß Figur 10 vorgesehen, dass das Prüfmodul PM und die beiden Erfassungsmodule ER1 und ER2 in der Rechnereinrichtung 20 der technischen Anlage 10 implementiert sind und eine Plausibilitätsprüfung, wie oben beschrieben, von der internen Rechnereinrichtung 20 der technischen Anlage 10 selbst durchgeführt wird.

Die Rechnereinrichtung 20 weist beispielsweise einen Rechner 20a und einen Speicher 20b auf, in dem das Prüfmodul PM, das erste Erfassungsmodul ER1 und das zweite Erfassungsmodul ER2 abgespeichert sind. Diesbezüglich gelten die obigen Ausführungen im Zusammenhang mit der externen Rechnereinrichtung 30 bei dem Ausführungsbeispiel gemäß den Figuren 1 bis 8 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Anlage
- 11: Schutzeinrichtung
- 12: Zugangspunkt
- 13: Zugangspunkt
- 14: Zugangspunkt
- 20: Rechnereinrichtung
- 20a: Rechner
- 20b: Speicher
- 21: Vorort-Zugriffsschnittstelle
- 22: Fernzugriffsschnittstelle
- 30: Rechnereinrichtung
- 31: Rechner
- 32: Speicher
- 100: Prüfschritt
- 101: Zweig
- 102: Zweig
- 110: Plausibilitätsprüfschritt
- 111: Zweig
- 112: Zweig
- 120: Freigabeschritt
- 200: Prüfschritt
- 201: Zweig
- 202: Zweig
- 210: Plausibilitätsprüfschritt
- 211: Zweig
- 211a: Zweig
- 212: Zweig
- 212a: Zweig
- 220: Freigabeschritt

- AP: authorisierte Person
- AS: Alarmsignal
- ER1: Erfassungsmodul
- ER2: Erfassungsmodul
- P1: Datensatz
- P2: Datensatz
- PM: Prüfmodul
- PM1: Prüfmodul
- PM2: Prüfmodul
- RND: Rechnernutzerdaten
- UP: unauthorisierte Person
- VD: Vorortdaten

## Patentansprüche

1. Verfahren zum Schützen einer technischen Anlage (10), die einen physischen Personenzugang zu der Anlage (10) und einen computermäßigen Zugriff auf eine Rechnereinrichtung (20) der Anlage (10) ermöglicht, wobei
- Personen, die aktuellen Zugriff auf die Rechnereinrichtung (20) haben, als auf die Rechnereinrichtung (20) zugreifende Personen unter Bildung von Rechnernutzerdaten (RND) registriert werden und Personen, die sich in der Anlage (10) befinden, als vor Ort befindliche Personen unter Bildung von Vorortdaten (VD) registriert werden, und
- im Falle eines neuen Zugangs- oder eines neuen Zugriffswunsches eine Plausibilitätsprüfung durchgeführt wird, bei der geprüft wird, ob der Zugangswunsch mit den registrierten Rechnernutzerdaten (RND) plausibel ist oder der Zugriffswunsch mit den registrierten Vorortdaten (VD) plausibel ist,
**dadurch gekennzeichnet, dass**
- im Falle eines Zugangsversuchs einer Person in die Anlage (10) geprüft wird, ob die Person zu diesem Zeitpunkt als auf die Rechnereinrichtung (20) zugreifende Person registriert ist, und, falls dies der Fall ist, auf ein Plausibilitätsproblem geschlossen wird,
- und dass
- die Rechnereinrichtung (20) einen Fernzugriff ermöglicht und
- im Falle eines Fernzugriffsversuchs geprüft wird, ob die Person zu diesem Zeitpunkt als in der Anlage (10) befindlich registriert ist oder in einer vor diesem Zeitpunkt liegenden Sicherheitszeitspanne vorgegebener Länge als in der Anlage (10) befindlich registriert war, und, falls dies der Fall ist, auf ein Plausibilitätsproblem geschlossen wird.

2. Verfahren nach Anspruch 1,
**dadurch gekennzeichnet, dass**
- im Falle eines bei der Plausibilitätsprüfung festgestellten Plausibilitätsproblems ein Alarmsignal (AS) erzeugt wird und/oder
- im Falle eines Zugangswunsches bei Feststellung eines Plausibilitätsproblems der Zugang verweigert wird, und/oder
- im Falle eines Zugriffswunsches bei Feststellung eines Plausibilitätsproblems der Zugriff verweigert wird, und/oder
- im Falle eines Zugangswunsches der Zugang ausschließlich dann gewährt wird, wenn die Plausibilitätsprüfung kein Plausibilitätsproblem ergibt, und/oder
- im Falle eines Zugriffswunsches der Zugriff ausschließlich dann gewährt wird, wenn die Plausibilitätsprüfung kein Plausibilitätsproblem ergibt.

3. Verfahren nach einem der voranstehenden Ansprüche,
**dadurch gekennzeichnet, dass**
- die Rechnereinrichtung (20) einen Fernzugriff ermöglicht und
- im Falle eines Zugangsversuchs einer Person in die Anlage (10) geprüft wird, ob die Person zu diesem Zeitpunkt als über einen Fernzugriff zugreifende Person registriert ist, und, falls dies der Fall ist, auf ein Plausibilitätsproblem geschlossen wird.

4. Verfahren nach einem der voranstehenden Ansprüche,
**dadurch gekennzeichnet, dass** im Falle eines Zugangsversuchs einer Person in die Anlage (10) geprüft wird, ob die Person in einer vor diesem Zeitpunkt liegenden Sicherheitszeitspanne vorgegebener Länge als auf die Rechnereinrichtung (20) zugreifende Person registriert war, und, falls dies der Fall ist, auf ein Plausibilitätsproblem geschlossen wird.

5. Verfahren nach einem der voranstehenden Ansprüche,
**dadurch gekennzeichnet, dass**
- die Rechnereinrichtung (20) einen Fernzugriff ermöglicht und
- im Falle eines Zugangsversuchs einer Person in die Anlage (10) geprüft wird, ob die Person in einer vor diesem Zeitpunkt liegenden Sicherheitszeitspanne vorgegebener Länge als über einen Fernzugriff zugreifende Person registriert war, und, falls dies der Fall ist, auf ein Plausibilitätsproblem geschlossen wird.

6. Verfahren nach einem der voranstehenden Ansprüche,
**dadurch gekennzeichnet, dass** im Falle eines vor Ort stattfindenden Zugriffsversuchs auf die Rechnereinrichtung (20) geprüft wird, ob die zugreifende Person zu diesem Zeitpunkt als in der Anlage (10) befindlich registriert ist und, falls dies nicht der Fall ist, auf ein Plausibilitätsproblem geschlossen wird.

7. Verfahren nach einem der voranstehenden Ansprüche,
**dadurch gekennzeichnet, dass** als technische Anlage (10) ein Umspannwerk einer elektrischen Energieverteilanlage geschützt wird.

8. Verfahren nach Anspruch 7,
**dadurch gekennzeichnet, dass**
- eine Rechnereinrichtung (20) eine Steuereinrichtung des Umspannwerks oder einen Bestandteil einer Steuereinrichtung des Umspannwerks bildet und
- diese Rechnereinrichtung (20) und/oder eine dieser Rechnereinrichtung (20) übergeordnete Rechnereinrichtung (30) die Plausibilitätsprüfung vornimmt.

9. Missbrauchserkennungseinrichtung zum Schützen einer technischen Anlage (10), die einen physischen Personenzugang zu der Anlage (10) und einen computermäßigen Zugriff auf eine Rechnereinrichtung (20) der Anlage (10) ermöglicht, wobei
- die Missbrauchserkennungseinrichtung eine erste Erfassungseinrichtung aufweist, die Personen, die aktuellen Zugriff auf die Rechnereinrichtung (20) haben, als auf die Rechnereinrichtung (20) zugreifende Personen unter Bildung von Rechnernutzerdaten (RND) registriert,
- die Missbrauchserkennungseinrichtung eine zweite Erfassungseinrichtung aufweist, die Personen, die sich in der Anlage (10) befinden, als vor Ort befindliche Personen unter Bildung von Vorortdaten (VD) registriert, und
- die Missbrauchserkennungseinrichtung eine Prüfeinrichtung aufweist, die im Falle eines neuen Zugangs- oder eines neuen Zugriffswunsches eine Plausibilitätsprüfung durchführt, bei der sie prüft, ob der Zugangswunsch mit den registrierten Rechnernutzerdaten (RND) plausibel ist oder der Zugriffswunsch mit den registrierten Vorortdaten (VD) plausibel ist,
**dadurch gekennzeichnet, dass**
- die Prüfeinrichtung ausgebildet ist, im Falle eines Zugangsversuchs einer Person in die Anlage (10) zu prüfen, ob die Person zu diesem Zeitpunkt als auf die Rechnereinrichtung (20) zugreifende Person registriert ist, und, falls dies der Fall ist, auf ein Plausibilitätsproblem geschlossen wird,
- und dass
- die Rechnereinrichtung (20) einen Fernzugriff ermöglicht und dass
- die Prüfeinrichtung ausgebildet ist, im Falle eines Fernzugriffsversuchs zu prüfen, ob die Person zu diesem Zeitpunkt als in der Anlage (10) befindlich registriert ist oder in einer vor diesem Zeitpunkt liegenden Sicherheitszeitspanne vorgegebener Länge als in der Anlage (10) befindlich registriert war, und, falls dies der Fall ist, auf ein Plausibilitätsproblem geschlossen wird.

10. Missbrauchserkennungseinrichtung nach Anspruch 9,
**dadurch gekennzeichnet, dass**
- die Missbrauchserkennungseinrichtung eine Alarmeinrichtung aufweist, die im Falle eines festgestellten Plausibilitätsproblems ein Alarmsignal (AS) erzeugt, und/oder
- die Missbrauchserkennungseinrichtung eine Zugangssteuereinrichtung aufweist, die im Falle eines Zugangswunsches bei Feststellung eines Plausibilitätsproblems den Zugang verweigert und/oder im Falle eines Zugangswunsches den Zugang ausschließlich dann gewährt, wenn die Plausibilitätsprüfung kein Plausibilitätsproblem ergibt, und/oder
- die Missbrauchserkennungseinrichtung eine Zugriffssteuereinrichtung aufweist, die im Falle eines Zugriffswunsches bei Feststellung eines Plausibilitätsproblems den Zugriff verweigert und/oder im Falle eines Zugriffswunsches den Zugriff ausschließlich dann gewährt, wenn die Plausibilitätsprüfung kein Plausibilitätsproblem ergibt.

11. Missbrauchserkennungseinrichtung nach Anspruch 9 oder 10,
**dadurch gekennzeichnet, dass**
die Prüfeinrichtung der Missbrauchserkennungseinrichtung als Softwaremodul (PM) in der Rechnereinrichtung (20) der technischen Anlage (10) oder in einer dieser Rechnereinrichtung (20) übergeordneten Rechnereinrichtung (30) implementiert ist.

12. Umspannwerk,
**dadurch gekennzeichnet, dass**
das Umspannwerk eine Missbrauchserkennungseinrichtung nach einem der Ansprüche 9 bis 11 aufweist.

13. Umspannwerk nach Anspruch 12,
**dadurch gekennzeichnet, dass**
- eine Rechnereinrichtung (20) des Umspannwerks als Steuereinrichtung zum Steuern des Umspannwerks ausgestaltet ist und
- zumindest die Prüfeinrichtung der Missbrauchserkennungseinrichtung als Softwaremodul (PM) in der Rechnereinrichtung (20) des Umspannwerks oder in einer der Rechnereinrichtung (20) des Umspannwerks übergeordneten Rechnereinrichtung (30) implementiert ist.

## Claims

1. Method for protecting a technical installation (10) that enables physical entry by persons to the installation (10) and a computerized access to a computer device (20) of the installation (10), wherein
- persons who have current access to the computer device (20) are registered as persons accessing the computer device (20) with the formation of computer user data (RND), and persons who are present in the installation (10) are registered as persons present on site with the formation of on-site data (VD), and
- in the event of a new desired entry or a new desired access, a plausibility check is carried out in which a check is made as to whether the desired entry is plausible using the registered computer user data (RND) or whether the desired access is plausible using the registered on-site data (VD),
**characterized in that**,
- in the event of an entry attempt of a person into the installation (10), a check is made as to whether the person is registered at this moment as a person accessing the computer device (20) and, if this is the case, a plausibility problem is deduced,
- and **in that**
- the computer device (20) allows remote access, and
- in the event of a desired remote access, a check is made as to whether the person is registered at this moment as being present in the installation (10) or was registered during a security interval of predetermined length prior to this moment as being present in the installation (10) and, if this is the case, a plausibility problem is deduced.

2. Method according to Claim 1,
**characterized in that**
- in the event of a plausibility problem being established by the plausibility check, an alarm signal (AS) is generated and/or
- in the event of a desired entry with the establishment of a plausibility problem, the entry is denied, and/or
- in the event of a desired access with the establishment of a plausibility problem, the access is denied, and/or
- in the event of a desired entry, the entry is only granted if the plausibility check does not yield a plausibility problem, and/or
- in the event of a desired access, the access is only granted if the plausibility check does not yield a plausibility problem.

3. Method according to either of the preceding claims,
**characterized in that**
- the computer device (20) allows remote access, and
- in the event of an entry attempt of a person into the installation (10), a check is made as to whether the person is registered at this moment as a person accessing by remote access and, if this is the case, a plausibility problem is deduced.

4. Method according to one of the preceding claims,
**characterized in that**
in the event of an entry attempt of a person into the installation (10), a check is made as to whether the person was registered during a security interval of predetermined length prior to this moment as a person accessing the computer device (20) and, if this is the case, a plausibility problem is deduced.

5. Method according to one of the preceding claims,
**characterized in that**
- the computer device (20) allows remote access, and
- in the event of an entry attempt of a person into the installation (10), a check is made as to whether the person was registered during a security interval of predetermined length prior to this moment as a person accessing by remote access and, if this is the case, a plausibility problem is deduced.

6. Method according to one of the preceding claims,
**characterized in that**
in the event of an access attempt to the computer device (20) taking place on site, a check is made as to whether the person making the access is registered at this moment as being present in the installation (10), and if this is not the case, a plausibility problem is deduced.

7. Method according to one of the preceding claims,
**characterized in that**
a substation of an electrical energy distribution system is protected as the technical installation (10).

8. Method according to Claim 7,
**characterized in that**
- a computer device (20) forms a control device of the substation or a component of a control device of the substation, and
- this computer device (20) and/or a computer device (30) that is superordinate to this computer device (20) performs the plausibility check.

9. Misuse recognition device for protecting a technical installation (10) that enables physical entry by persons to the installation (10) and a computerized access to a computer device (20) of the installation (10), wherein
- the misuse recognition device comprises a first acquisition device that registers persons who have current access to the computer device (20) as persons accessing the computer device (20) with the formation of computer user data (RND),
- the misuse recognition device comprises a second acquisition device that registers persons who are present in the installation (10) as persons present on site with the formation of on-site data (VD), and
- the misuse recognition device comprises a checking device which, in the event of a new desired entry or a new desired access, carries out a plausibility check in which a check is made as to whether the desired entry is plausible using the registered computer user data (RND) or whether the desired access is plausible using the registered on-site data (VD),
**characterized in that**
- the checking device is designed, in the event of an entry attempt of a person into the installation (10), to make a check as to whether the person is registered at this moment as a person accessing the computer device (20) and, if this is the case, a plausibility problem is deduced,
- and **in that**
- the computer device (20) allows remote access, and **in that**
- the checking device is designed, in the event of a remote access attempt, to make a check as to whether the person is registered at this moment as being present in the installation (10) or was registered during a security interval of predetermined length prior to this moment as being present in the installation (10) and, if this is the case, a plausibility problem is deduced.

10. Misuse recognition device according to Claim 9,
**characterized in that**
- the misuse recognition device comprises an alarm device that generates an alarm signal (AS) in the event that a plausibility problem is established, and/or
- the misuse recognition device comprises an entry control device, which in the case of a desired entry where a plausibility problem is established, denies entry and/or in the case of a desired entry only grants entry if the plausibility check does not yield a plausibility problem, and/or
- the misuse recognition device comprises an access control device, which in the case of a desired access where a plausibility problem is established, denies access and/or in the case of a desired access only grants access if the plausibility check does not yield a plausibility problem.

11. Misuse recognition device according to Claim 9 or 10,
**characterized in that**
the checking device of the misuse recognition device is implemented as a software module (PM) in the computer device (20) of the technical installation (10) or in a computer device (30) that is superordinate to this computer device (20) .

12. Substation,
**characterized in that**
the substation comprises a misuse recognition device according to one of Claims 9 to 11.

13. Substation according to Claim 12,
**characterized in that**
- a computer device (20) of the substation is configured as a control device for controlling the substation, and
- at least the checking device of the misuse recognition device is implemented as a software module (PM) in the computer device (20) of the substation or in a computer device (30) that is superordinate to the computer device (20) of the substation.

## Revendications

1. Procédé de protection d'une installation (10) technique, qui rend possible un accès physique des personnes à l'installation (10) et un accès par ordinateur à un dispositif (20) informatique de l'installation (10), dans lequel
- on enregistre des personnes, qui ont un accès en cours au dispositif (20) informatique, comme des personnes accédant au dispositif (20) informatique, avec formation de données (RND) d'utilisateur d'ordinateur et on enregistre des personnes, qui se trouvent dans l'installation (10), comme des personnes se trouvant sur site avec formation de données (VD) sur site, et
- dans le cas d'une entrée nouvelle ou d'un accès nouveau, on effectue un contrôle de vraisemblance, dans lequel on contrôle si le souhait d'entrée est plausible avec les données (RND) d'utilisateur d'ordinateur enregistrées ou si le souhait d'accès est plausible avec les données (VD) sur site enregistrées,
**caractérisé en ce que**
- dans le cas d'un essai d'accès d'une personne à l'installation (10), on contrôle si la personne est à cet instant enregistrée comme une personne accédant au dispositif (20) d'ordinateur et, si cela est le cas, on en déduit un problème de vraisemblance,
- et **en ce que**
- le dispositif (20) d'ordinateur rend possible un accès à distance, et
- dans le cas d'une tentative d'accès à distance, on contrôle si la personne est à cet instant enregistrée comme se trouvant dans l'installation (10) ou si elle était enregistrée, dans un laps de temps de sécurité d'une longueur donnée à l'avance se trouvant avant cet instant, comme se trouvant dans l'installation (10) et, si cela est le cas, on en déduit un problème de vraisemblance.

2. Procédé suivant la revendication 1,
**caractérisé en ce que**
- dans le cas d'un problème de vraisemblance constaté au contrôle de vraisemblance, on produit un signal (AS) d'alerte, et/ou
- dans le cas d'un souhait d'entrée, on rejette l'entrée à la constatation d'un problème de vraisemblance, et/ou
- dans le cas d'un souhait d'accès, on rejette, à la constatation d'un problème de vraisemblance, l'accès, et/ou
- dans le cas d'un souhait d'entrée, on assure l'entrée seulement si le contrôle de vraisemblance ne donne pas de problème de vraisemblance, et/ou
- dans le cas d'un souhait d'accès, on accorde l'accès seulement si le contrôle de vraisemblance ne donne pas de problème de vraisemblance.

3. Procédé suivant l'une des revendications précédentes,
**caractérisé en ce que**
- le dispositif (20) d'ordinateur rend possible un accès à distance, et
- dans le cas d'une tentative d'entrée d'une personne dans l'installation (10), on contrôle si la personne est, à cet instant, enregistrée comme une personne disposant d'un accès à distance et, si cela est le cas, on en déduit un problème de vraisemblance.

4. Procédé suivant l'une des revendications précédentes,
**caractérisé en ce que**
dans le cas d'une tentative d'entrée d'une personne dans l'installation (10), on contrôle si la personne était, dans un laps de temps de sécurité d'une longueur donnée à l'avance avant cet instant, enregistrée comme une personne accédant au dispositif (20) d'ordinateur et, si cela est le cas, on en déduit un problème de vraisemblance.

5. Procédé suivant l'une des revendications précédentes,
**caractérisé en ce que**
- le dispositif (20) d'ordinateur rend possible un accès à distance, et
- dans le cas d'une tentative d'entrée d'une personne dans l'installation (10), on contrôle si la personne était, dans un laps de temps de sécurité d'une longueur donnée à l'avance avant cet instant, enregistrée comme une personne accédant par un accès à distance et, si cela est le cas, on en déduit un problème de vraisemblance.

6. Procédé suivant l'une des revendications précédentes,
**caractérisé en ce que**
dans le cas d'une tentative d'accès, ayant lieu sur site, au dispositif (20) d'ordinateur, on contrôle si la personne accédant est, à cet instant, enregistrée comme se trouvant dans l'installation (10) et, si cela n'est pas le cas, on en déduit un problème de vraisemblance.

7. Procédé suivant l'une des revendications précédentes,
**caractérisé en ce que**
l'on protège, comme installation (10) technique, un poste de transformation d'une installation de distribution d'énergie électrique.

8. Procédé suivant la revendication 7,
**caractérisé en ce que**
- un dispositif (20) d'ordinateur forme un dispositif de commande du poste de transformation ou une partie constitutive d'un dispositif de commande du poste de transformation, et
- ce dispositif (20) d'ordinateur et/ou un dispositif (30) d'ordinateur supérieur hiérarchiquement à ce dispositif (20) d'ordinateur effectue le contrôle de vraisemblance.

9. Dispositif de détection d'un mésusage pour la protection d'une installation (10) technique, qui rend possible une entrée physique de personnes à l'installation (10) et un accès en informatique à un dispositif (20) d'ordinateur de l'installation (10), dans lequel
- le dispositif de détection d'un mésusage comporte un premier dispositif de détection, qui enregistre des personnes, qui ont accès actuellement au dispositif (20) d'ordinateur, comme des personnes accédant au dispositif (20) d'ordinateur avec formation de données (RND) d'utilisateur d'ordinateur,
- le dispositif de détection d'un mésusage comporte un deuxième dispositif de détection, qui enregistre des personnes, qui se trouvent dans l'installation (10) comme des personnes se trouvant sur site, avec formation de données (VD) sur site, et
- le dispositif de détection d'un mésusage comporte un dispositif de contrôle qui, dans le cas d'un nouveau souhait d'entrée ou d'un nouveau souhait d'accès, effectue un contrôle de vraisemblance, dans lequel il contrôle, si le souhait d'entrée est plausible avec les données (RND) d'utilisateur d'ordinateur enregistrées ou si le souhait d'accès est plausible avec les données (VD) sur site enregistrées,
**caractérisé en ce que**
- le dispositif est constitué pour, dans le cas d'une tentative d'entrée d'une personne dans l'installation (10), contrôler si la personne est, à cet instant, enregistrée comme une personne accédant au dispositif (20) d'ordinateur et, si cela est le cas, en déduire un problème de vraisemblance,
- et **en ce que**
- le dispositif (20) d'ordinateur rend possible un accès à distance, et **en ce que**
- le dispositif de contrôle est constitué pour contrôler, dans le cas d'une tentative d'accès à distance, si la personne est enregistrée, à cet instant, comme se trouvant dans l'installation (10) ou était enregistrée, dans un laps de temps d'une longueur donnée avant cet instant, comme se trouvant dans l'installation (10) et, si cela est le cas, en déduire un problème de vraisemblance.

10. Dispositif de détection d'un mésusage suivant la revendication 9,
**caractérisé en ce que**
- le dispositif de détection d'un mésusage comporte un dispositif d'alerte qui, dans le cas de la constatation d'un problème de vraisemblance, produit un signal (AS) d'alerte, et/ou
- le dispositif de détection d'un mésusage comporte un dispositif de commande d'entrée qui, dans le cas d'un souhait d'entrée, à la constatation d'un problème de vraisemblance, refuse l'entrée, et/ou dans le cas d'un souhait d'entrée, accorde l'entrée seulement si le contrôle de vraisemblance ne donne pas de problème de vraisemblance, et/ou
- le dispositif de détection d'un mésusage comporte un dispositif de commande d'accès qui, dans le cas d'un souhait d'accès refuse, à la constatation d'un problème de vraisemblance, l'accès, et/ou dans le cas d'un souhait d'accès, accorde à l'accès seulement si le contrôle de vraisemblance ne donne pas de problème de vraisemblance.

11. Dispositif de détection d'un mésusage suivant la revendication 9 ou 10,
**caractérisé en ce que**
le dispositif de contrôle du dispositif de détection d'un mésusage est mis en oeuvre sous la forme d'un module (PM) logiciel dans le dispositif (20) d'ordinateur de l'installation (10) technique ou dans un dispositif (30) d'ordinateur supérieur hiérarchiquement à ce dispositif (20) d'ordinateur.

12. Poste de transformation,
**caractérisé en ce que**
le poste de transformation a un dispositif de détection d'un mésusage suivant l'une des revendications 9 à 11.

13. Poste de transformation suivant la revendication 12,
**caractérisé en ce que**
- un dispositif (20) d'ordinateur du poste de transformation est conformé en dispositif de commande pour la commande du poste de transformation, et
- au moins le dispositif de contrôle du dispositif de détection d'un mésusage est mis en oeuvre comme module (PM) logiciel dans le dispositif (20) d'ordinateur du poste de transformation ou dans le dispositif (30) d'ordinateur supérieur hiérarchiquement au dispositif (20) d'ordinateur du poste de transformation.
